# EUROPEAN PATENT SPECIFICATION

(11) **EP 4 504 000 B1**
(45) Date of publication and mention of the grant of the patent: **15.07.2026**
(21) Application number: 23714087.6
(22) Date of filing: 16.03.2023
(51) Int. Cl.: A46B 11/00, A61C 17/22, A46B 15/00, A61C 17/02, A46B 3/00, A61C 15/02

(54) **DENTAL SYSTEM**
DENTALSYSTEM
SYSTÈME DENTAIRE

(30) Priority: 03.04.2022 GB 202204856; 08.02.2023 GB 202301787
(43) Date of publication of application: 12.02.2025
(73) Proprietor: Bristol Dental Innovations Limited, Bristol BS1 5QT (GB)
(72) Inventor: ABOLKHEIR, Mohamed, Bristol BS1 5BJ (GB); HICKS, Benjamin, Weston Bath and North East, Somerset BA1 3RU (GB)
(74) Representative: Haseltine Lake Kempner LLP
(86) International application number: PCT/GB2023/050617
(87) International publication number: WO 2023/194703

(56) References cited:
- US-A1- 2003 224 320
- US-A1- 2005 032 019
- US-A1- 2010 015 567
- US-A1- 2015 033 482

## Description

The present invention relates to an interdental brushing system.

### Background Art

The control of oral biofilm, both above and below the gum tissue, is an integral component to both oral and systemic health. This task cannot be effectively completed with standard toothbrushing alone, requiring the use of one or more products from the category of interdental adjunctive cleaning aids. Current research and dental professional recommendations have guided the development of such interdental products, supporting the efficacy of their use. Some of these over-the-counter products include traditional floss, floss thread onto a reaching device, small wired brushes, oral medicated rinses which flow interproximal, forced water aids, and interdental brushes formed from various manufactured materials.

Recent research shows, when used properly, interdental brushes provide an ideal solution for plaque biofilm disruption and subsequent removal. Brushing the teeth by using interdental brushes has been found to be superior to flossing due to the fundamentally different cleaning action resulting from the forces of the bristles compared to tape or string which only rubs the contours of the teeth where it is in contact. However, unlike cleaning the facial and lingual aspects of the teeth, for which a universal soft brush can be easily chosen, the interproximal gaps between adjacent teeth have spaces that can vary significantly in size, from under half millimetre to several millimetres. The variation of space for plaque biofilm to grow has been traditionally managed by a manufacturer supplying an array of interdental brushes at different sizes, each routinely identifiable using a different colour. This multiplicity of sizes creates a multiplicity of challenges to users who must select the appropriate size of brush from the rainbow of choices.

The first complexity is the challenge the user faces in both knowing and remembering which size brush to properly clean which interproximal gap in each individual location. A brush too large cannot be placed in a tight juncture between the teeth, whilst a brush too small can be slid into the gap, yet would not have the girth to effectively penetrate and dislodge the plaque biofilm and engage the tooth surface. The multiplicity of sizes required for each individual mouth often requires the frequent alternation of interdental brushes while progressing the cleaning actions in various directions inside the mouth. A secondary problem is the cost of buying various different interdental brushes to meet the needs of an individual presenting an additional problem of maintaining a stock of each size for use when one of the array of sizes needs to be replaced during the cleaning sequence. These compounded challenges discourage millions of people from cleaning in-between their teeth as frequently and efficiently as recommended, resulting in an estimated 80% of all adults having some form of periodontal disease condition, an infective inflammation of the tissues surrounding the individual teeth.

The present invention addresses all these problems by providing an interdental brushing system, whose size can be changed by the user while moving from gap space to gap space in the sequence of plaque biofilm disruption inside the mouth.
US 2010/0015567 relates to a dental hygiene tool which comprises a conical, hollow, compressible and expansive tip made of elastomeric material and having a pointed end dimensioned to penetrate interproximal spaces.

### Summary of the Invention

According to the present invention there is provided an interdental brushing system (1) as defined in claim 1. Further embodiments are recited in the dependent claims. According to the claimed, the system comprises:
brushing girth means (2);
girth resizing means (3); and
control means (4),
wherein girth resizing means (3) comprises hydraulic means or pneumatic means comprising at least one fluid chamber which is divided into reservoir region (3A) and girth region (3B), which are collectively arranged such that control means (4) is used to adjust girth resizing means (3), which is configured to expand or contract brushing girth (2) to suit the different sizes of gaps in- between the teeth.

The interdental brushing system may further comprise a handle (5) which substantially surrounds control means (4).

The interdental brushing system may further include a hinge (3C) to facilitate bending around the teeth and comprises a variation in material or a variation in geometry such as in bellows or a mechanical hinge.

According to the claimed invention, the control means (4) comprises a flexible material which is positioned in, or surrounds, reservoir region (3A), such that it can be squeezed using finger pressure to displace a sufficient amount of fluid from reservoir region (3A) into girth region (3B) thus expanding the size of brushing girth (2) as required, or reverse the process by releasing the finger pressure to displace the fluid back from girth region (3B) into reservoir region (3A) thus contracting the size of brushing girth (2) as required.

The hydraulic means may comprise a liquid such as water. Other liquids, such as inert liquids including, for example, medical grade silicone may be used.

The pneumatic means may comprise a gas such as air. Other gases such as inert gases may be used.

In one aspect, the at least one fluid chamber is sealed.

In another aspect, the at least one fluid chamber is configured to be filled, emptied and refilled via plug (6).

The interdental brushing system may further comprise a mouthwash subsystem (7), which comprises: mouthwash chamber (7A), mouthwash plunger (7B), and mouthwash dispensing means, which can be holes or permeable membrane (7C).

In one aspect, the brushing girth (2) comprises surface protrusions.

In another aspect, the brushing girth (2) comprises bristles.

In a further aspect, the brushing girth (2) may comprise a brushing sheath.

In one aspect, the control means (4) further comprises rotary means or linear means or a combination of the two, which are discrete control means or continuous control means.

The interdental brushing system may be configured, by manufacturing, to be connected to an actuator, interface, connector, or an adaptor of widely available electric toothbrushing devices, via mechanical coupling (8).

In another aspect, the control means (4) is direct control means comprising an arrangement of mechanical levers or a fluid circuit, either of which is adjustable via a slider or a button.

In yet a further aspect, the control means (4) is indirect control means comprising an electric circuit, which is adjustable via a button or a slider.

In one aspect, the interdental brushing system is manufactured as a standalone electric device, and furthermore comprises: a power source which is a built-in battery or power adapter; actuator means; and an ON/Off button.

In one aspect, the control means functions to provide variable speed and/or stroke control means.

In another aspect, the interdental brushing system further comprises microcomputing means that can be programmed so as to follow a given sequence of girth sizes.

In a further aspect, the control means (4) further comprises pumping means.

### Brief Description of the Figures

The invention is illustrated by way of the following figures.
Figure 1 provides an elevation view, a sideview, and a cross sectional view of one embodiment of the invention.
Figure 2 provides an elevation view, a sideview and a cross sectional view of the same embodiment in Figure 1 but illustrating both girth region (3B) and brushing girth (2) in a synchronized expanded position.
Figure 3 provides an elevation view, a sideview and a cross sectional view of another embodiment of the invention, which is provided as another example. The embodiment in Figure 3 is similar to the embodiment in Figures 1 and 2 except that the brushing girth (2) comprises surface protrusions and there is also a hinge (3C).
Figure 4 provides an elevation view, a sideview and a cross sectional view of another embodiment of the invention, which is provided as another example. In Figure 4, the brushing girth (2) comprises protrusions and the fluid chamber is unsealed.
Figure 5 includes an elevation view, a sideview and a cross sectional view of another embodiment of the invention, which is provided as yet another example. In Figure 5, the brushing girth (2) comprises protrusions and there is also a mouthwash subsystem (7).
Figure 6 includes an elevation view, and a cross sectional view of another additional example. In Figure 6, the brushing girth (2) comprises bristles, the girth resizing means (3) comprises an auxetic material, and the control means (4) comprises rotary mechanical adjustments.
Figure 7 includes an elevation view, and a sideview, of yet another embodiment of the invention, provided as another example. In Figure 7, the brushing girth (2) comprises bristles, the girth resizing means (3) comprises an auxetic material, and the control means (4) is direct control means comprising an arrangement of mechanical levers, which are adjustable via slider (10).
Figure 8 includes an elevation view, and a sideview of another embodiment of the invention, which is provided as yet another example. The embodiment in Figure 8 is an advanced version of the embodiment in Figure 7, according to which interdental brushing system (1) is manufactured as a standalone electric device.

### Detailed Description

According to the present invention there is provided an interdental brushing system (1), comprising:
brushing girth means (2);
girth resizing means (3); and
control means (4),
wherein girth resizing means (3) comprises hydraulic means or pneumatic means comprising at least one fluid chamber which is divided into reservoir region (3A) and girth region (3B), which are collectively arranged such that control means (4) is used to adjust girth resizing means (3), which is configured to expand or contract brushing girth (2) to suit the different sizes of gaps in- between the teeth.

Advantageously, the present invention allows entry of the interdental brushing system into small gaps and improves its efficacy when engaging with the teeth within larger gaps.

The term "brushing girth means" should be understood to mean the cleaning portion of the device. The brushing girth expands and contracts and is used to clean between the gaps between the teeth. The brushing girth may be made of a flexible material, such as a flexible polymer, rubber or silicon.

The brushing girth comprises one or more protrusions (also referred to herein as surface protrusions) or bristles. The protrusions or bristles may be soft, medium or hard. The bristles may be multi-angled. Preferably, the protrusions or bristles are made of polymers, which are insoluble in water. The polymer may be made from a synthetic polymer such as polyester or a biodegradable polymer, for example, starch. More preferably, the bristles are made of nylon, or silicone.

By a "brushing sheath" we mean a flexible covering that goes over the girth resizing means. The brushing sheath is the contact surface with the teeth and gum. The brushing sheath may be disconnected from the interdental brushing system and disposed of without having to dispose of the interdental brushing system itself. This way, the interdental brushing system can be continued to be used for much longer. This feature can be particularly useful for cleaning between exceptionally large gaps between the teeth. This feature can also be useful for reducing the amount of waste i.e., only the brushing sheath needs to be disposed of.

The term "girth resizing means" should be understood to mean the portion of the device which enables the brushing girth means to expand or contract. The girth resizing means comprises hydraulic means or pneumatic means. In a further embodiment, the brushing girth may also comprise elastic means or plastic deformation means.

By "hydraulic means" we mean a liquid capable of providing a force of pressure and which causes the girth resizing means to expand or contract.

By "pneumatic means" we mean a gas capable of providing a force of pressure which causes the girth resizing means to expand or contract.

By "elastic means" we mean at least one elastic material or at least one auxetic elastic material. Auxetic materials are structures that have a negative Poisson's ratio. When stretched, they become thicker perpendicular to the applied force. Examples of auxetic materials include, but are not limited to, polymer foams. Normal elastic materials may be synthetic or organic rubber materials selected from natural rubber, styrene butadiene rubber, butyl, nitrile, Neoprene^{®}, ethylene propylene diene monomer, silicone, fluoroelastomer and hydrogenated nitrile.

By "plastic deformation means' we mean at least one material or a purposefully designed structure that undergoes permanent deformation when a force or displacement is applied to it via the control means. This variation of the invention will be particularly relevant for single use. With potential to reduce cost and indicate that the device has been used.

According to the invention, the girth resizing means may comprise a sealed fluid chamber. The sealed fluid chamber can hold a liquid, for example water or a gas, such as air. Other inert liquids, such as medical grade silicone may be used.

By "control means" we mean the portion of the device that the user controls to adjust the girth resizing means so as to expand or contract brushing girth means.

The control means may comprise a surface or three-dimensional form that can be displaced by the user orthogonally or deformed be the user by squeezing in order to actuate the girth resizing means. An example is the use of a flexible (elastic) surface which surrounds the reservoir region that can be squeezed.

Additionally, the invention comprises control means (4) which comprises a flexible material such that it can be squeezed using finger pressure, and which is positioned in reservoir region (3A).

Preferably, there is also handle (5) which substantially surrounds control means (4). The handle may be made of materials, such as Silicone, PVC (Flexible / Rigid), Polyethylene (ULDPE, LDPE, MDPE, HDPE), Polypropylene (homopolymer and copolymer) Polystyrene, Thermoplastic Elastomers (TPE' s), Thermoplastic Polyurethane (TPU' s)-Polyurethanes, Polycarbonate, Nylon or latex.

In its initial state prior to use of interdental brushing system (1), the reservoir region (3A) will be full of fluid, with girth region (3B) being void of fluid, thus brushing girth (2) will be at its minimal size, so as to be suitable to fit into the smallest interproximal gap in-between the teeth. To increase the size of brushing girth (2) so as to effectively engage the teeth in larger gaps in-between the teeth, the user will apply finger pressure to control means (4) to displace a sufficient amount of fluid from reservoir region (3A) into girth region (3B) thus expanding the size of brushing girth (2) as required.

To reverse the process, the user will release the finger pressure to displace the fluid back from girth region (3B) into reservoir region (3A) thus contracting the size of brushing girth (2) as required.

As such, the system enters into small and large gaps alike, and allows effective engagement with the teeth regardless of the size of the gap. Human sensory feedback from the periodontal ligament space will allow the user to control the process effectively and easily as they feel the brush contour to fit the individual spaces it is placed.

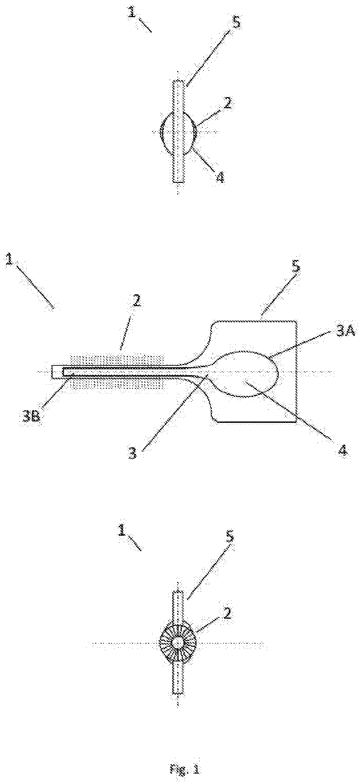

Whilst Figure 1 depicts a continuously variable and fully reversible embodiment, alternative embodiments can be discrete and / or irreversible. Irreversible embodiments can start at the smallest girth size and expand to the largest or start at the largest and decrease to the smallest. Such variation can either be continuous or discrete with predetermined intervals.

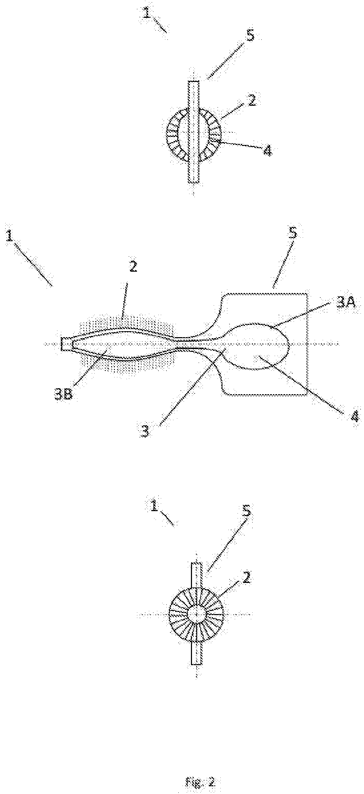

Figure 2 includes an elevation view, a sideview and a cross sectional view of the same embodiment in Figure 1 but illustrating both girth region (3B) and brushing girth (2) in a synchronized expanded position.

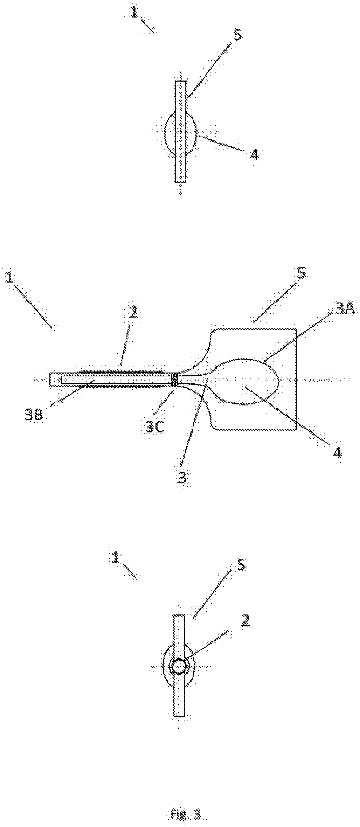

Figure 3 includes an elevation view, a sideview and a cross sectional view of another embodiment of the invention, which is provided as another example. This embodiment is similar to the embodiment illustrated in Figures 1 & 2, except that brushing girth (2) comprises surface protrusions, and furthermore, there is also hinge (3C) to facilitate bending around the teeth. Hinge (3C) is constructed as a variation in the material compared to the rest of the device, or a variation in the geometry as in bellows or a mechanical hinge. Preferably, hinge (3C) is interposed between reservoir region (3A), and girth region (3B).

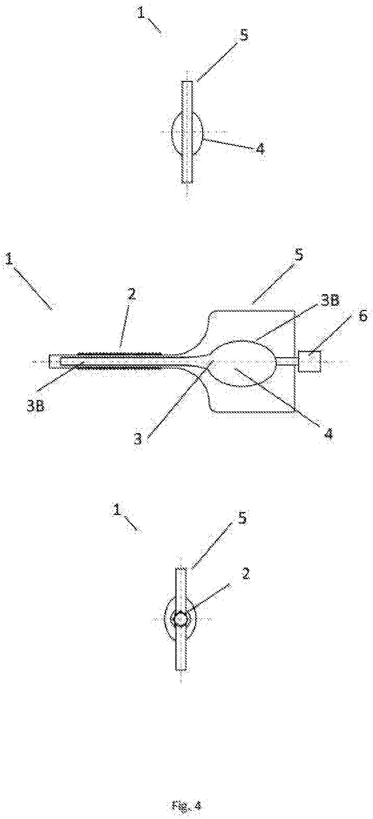

Figure 4 includes an elevation view, a sideview and a cross sectional view of another embodiment of the invention, which is provided as another example. In this embodiment, brushing girth (2) comprises protrusions (similar to the embodiment in Figure 3), but furthermore the fluid chamber is unsealed, and so can be filled, emptied and refilled via plug (6). The refillable fluid chamber allows the use of, for example, liquids of different colours to denote different users or different settings, if such usages are considered useful.

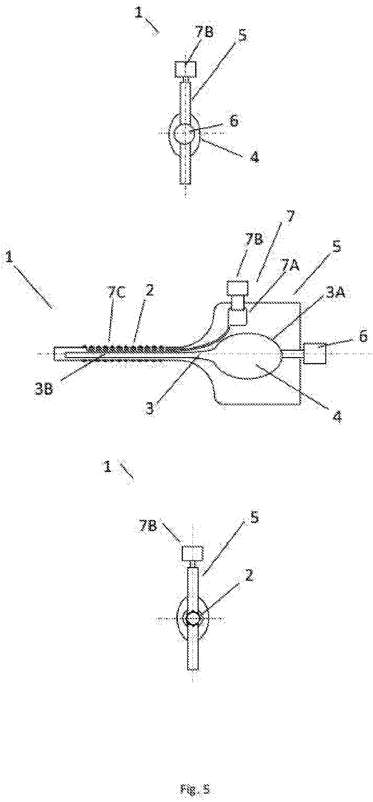

Figure 5 includes an elevation view, a sideview and a cross sectional view of another embodiment of the invention, which is provided as yet another example. In this embodiment, brushing girth (2) comprises protrusions (similar to the embodiments in Figures 3 & 4), but furthermore there is also a mouthwash subsystem (7), which comprises: mouthwash chamber (7A), mouthwash plunger (7B), and mouthwash dispensing means (7C), which can be holes or permeable membrane. Pressing on mouthwash plunger (7B) dispenses the mouthwash, but alternative dispensation means could be implemented, for example, a gravity feed.

There is increased potential for use in the placement of medicament solutions inside the chamber such as fluoride or hydroxyapatite derivatives for remineralization, or chlorhexidine or cetylpyridinium chloride for therapeutic antimicrobial broad-spectrum microbial therapy, providing a unique solution to pharmaceutic agent placement that has not before been investigated.

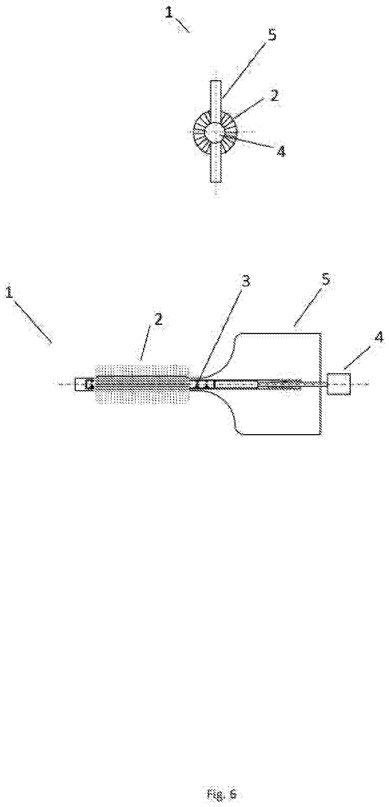

Figure 6 includes an elevation view, and a cross sectional view of another example. In this example, brushing girth (2) comprises bristles (similar to the embodiments in Figures 1 & 2), but girth resizing means (3) comprises an auxetic material or an elastic material, and control means (4) comprises rotary mechanical adjustments via a threaded shaft that is rotated in one direction to compress the material (or in the opposite direction to de-compress the material).

There are a few alternative design options for control means (4). For example, it can comprise linear mechanical means, or a combination of rotary and linear mechanical means, operating at discrete values or continuous values. The rotary mechanical control means, or the linear mechanical control means can be designed to operate in line with Poisson's Ratio or inverted.

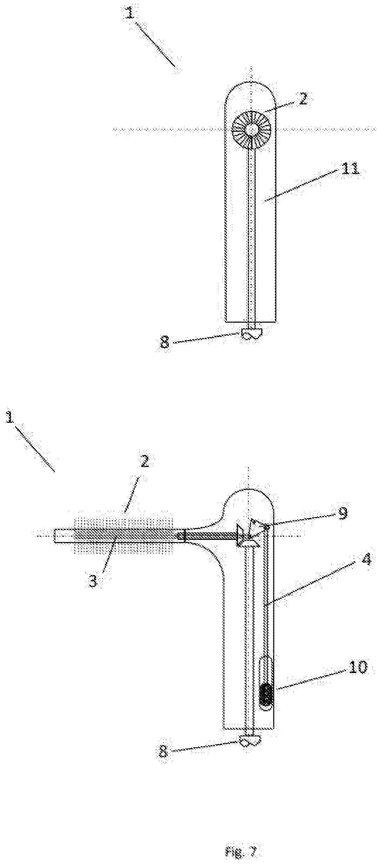

Figure 7 includes an elevation view, and a sideview, of yet another embodiment of the invention, provided as another example. In this embodiment, the interdental brushing system (1) is manufactured to be connected to the actuator or an interface or a connector or an adaptor of widely available electric toothbrushing devices, via mechanical coupling (8). Brushing girth (2) comprises bristles (similar to the embodiments in Figures 1, 2 and 6); girth resizing means (3) comprises an auxetic material (similar to the embodiment in Figure 6); and control means (4) is direct control means comprising an arrangement of mechanical levers (9), which are adjustable via slider (10). There is also casing (11). Variations of this embodiment include control means (4) comprising a fluid circuit. Whether control means (4) comprises an arrangement of mechanical levers or a fluid circuit or another means, it can be adjusted via a slider or a button. Advantageously, the interdental brushing system may be retro-fit.

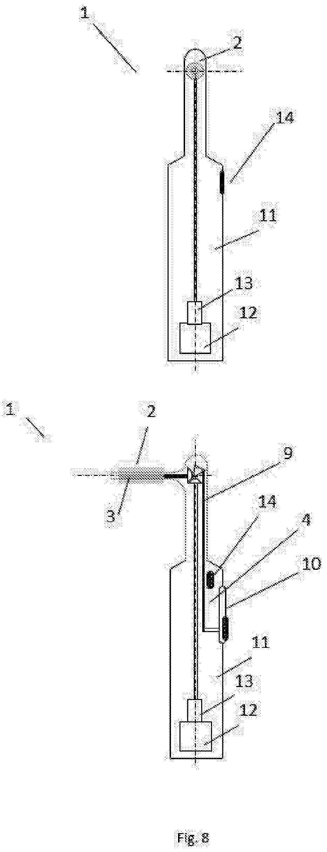

Figure 8 includes an elevation view, and a sideview of another embodiment of the invention, which is provided as yet another example. This embodiment is an advanced version of the embodiment in Figure 7, according to which interdental brushing system (1) is manufactured as a standalone electric device, which comes with its own power source and actuation means.

So, Figure 8 illustrates interdental brushing system (1), comprising: brushing girth (2) which comprises bristles (similar to the embodiments in Figures 1, 2, 6 & 7); girth resizing means(3) which comprises an auxetic material (similar to the embodiment in Figures 6 & 7); and control means (4) which is direct control means comprising an arrangement of mechanical levers (9), which are adjustable via slider (10). There is also casing (11). Furthermore, there is a power source which is built-in battery or power adapter (12), actuator means (13) which can be rotary actuation means or axially reciprocate actuation means, using for example gears or mechanisms such as a crank or a four-bar, and On/Off button (14). Other potential adaptations of this embodiment include a variable speed and/or stroke control means.

Additional variations include girth resizing means (2) comprising a fluid chamber (sealed as in Figures 1, 2 & 3, or unsealed as in Figures 4 & 5), with control means (4) comprising pumping means. Additional alterations to the design include an inclusion of microcomputing means that can be programmed as to follow a given sequence of girth sizes, and/or cleaning operations as done in electric toothbrush models that currently communicate with cellular phone apps, for example.

It is important to highlight the different variations of the invention as presented above, in particular what brushing girth (2), girth resizing means (3), and control means (4) comprise, are largely interchangeable features, and as such the designer can choose any combination of innovation to suit their product design goals.

The whole system can be manufactured from the same material or multiple materials.

The system has the environmental advantage of avoiding the throwing away of colossal numbers of interdental brushes made in different sizes, worldwide, due to the creation of a more universal product that could be disposed of after fully worn.

## Claims

1. An interdental brushing system (1), comprising:
brushing girth means (2);
girth resizing means (3); and
control means (4),
wherein girth resizing means (3) comprises hydraulic means or pneumatic means comprising one fluid chamber which is divided into reservoir region (3A) and girth region (3B), which are collectively arranged such that control means (4) is used to adjust girth resizing means (3), which is configured to expand or contract brushing girth (2) to suit the different sizes of gaps in-between the teeth, and **characterised in that** said control means (4) comprises a flexible material which is positioned in, or surrounds, reservoir region (3A), such that it can be squeezed using finger pressure to displace a sufficient amount of fluid from reservoir region (3A) into girth region (3B) thus expanding the size of brushing girth (2) as required, or reverse the process by releasing the finger pressure to displace the fluid back from girth region (3B) into reservoir region (3A) thus contracting the size of brushing girth (2) as required.

2. The interdental brushing system as claimed in Claim 1, wherein the system further comprises a handle (5) which substantially surrounds control means (4).

3. The interdental brushing system as claimed in any preceding claim in which the fluid chamber comprises hydraulic means, and wherein the hydraulic means comprises a liquid such as water.

4. The interdental brushing system as claimed in claims 1 or 2, in which the fluid chamber comprises pneumatic means, and wherein the pneumatic means comprises a gas such as air.

5. The interdental brushing system as claimed in any preceding claim, in which the fluid chamber is sealed.

6. The interdental brushing system as claimed in any preceding claim, in which the fluid chamber is configured such that it can be filled, emptied and refilled via plug (6).

7. The interdental brushing system as claimed in any preceding claim, which further comprises a mouthwash subsystem (7), which comprises: mouthwash chamber (7A), mouthwash plunger (7B), and mouthwash dispensing means, which can comprise holes or permeable membrane (7C).

8. The interdental brushing system as claimed in any preceding claim, in which there is also hinge (3C) to facilitate bending around the teeth and comprises a variation in material or a variation in geometry such as in bellows or a mechanical hinge.

9. The interdental brushing system as claimed in any preceding claim, in which brushing girth means (2) comprises surface protrusions or bristles.

10. The interdental system as claimed in any preceding claim, in which the brushing girth (2) comprises a brushing sheath.

## Patentansprüche

1. Interdentales Bürstsystem (1), umfassend:
Bürstumfangsmittel (2);
Umfangsanpassungsmittel (3); und
Kontrollmittel (4),
wobei Umfangsanpassungsmittel (3) Hydraulikmittel oder Pneumatikmittel umfasst, umfassend eine Fluidkammer, die in Reservoirbereich (3A) und Umfangsbereich (3B) unterteilt ist, die kollektiv derart angeordnet sind, dass Kontrollmittel (4) verwendet wird, um Umfangsanpassungsmittel (3) anzupassen, das dafür konfiguriert ist, Bürstumfang (2) zu expandieren oder zu kontrahieren, um den unterschiedlichen Größen von Lücken zwischen den Zähnen zu entsprechen, und **dadurch gekennzeichnet, dass** das Kontrollmittel (4) ein flexibles Material umfasst, das in Reservoirbereich (3A) positioniert ist oder diesen umgibt, sodass es unter Verwendung von Fingerdruck zusammengedrückt werden kann, um eine ausreichende Menge an Fluid aus Reservoirbereich (3A) in Umfangsbereich (3B) zu verdrängen, wodurch die Größe des Bürstumfangs (2) wie erforderlich expandiert wird, oder den Vorgang durch Loslassen des Fingerdrucks umzukehren, um das Fluid aus Umfangsbereich (3B) zurück in Reservoirbereich (3A) zu verdrängen, wodurch die Größe des Bürstumfangs (2) wie erforderlich kontrahiert wird.

2. Interdentales Bürstsystem nach Anspruch 1, wobei das System ferner einen Griff (5) umfasst, der Kontrollmittel (4) im Wesentlichen umgibt.

3. Interdentales Bürstsystem nach einem der vorhergehenden Ansprüche, bei dem die Fluidkammer Hydraulikmittel umfasst, und wobei das Hydraulikmittel eine Flüssigkeit wie Wasser umfasst.

4. Interdentales Bürstsystem nach Anspruch 1 oder 2, bei dem die Fluidkammer Pneumatikmittel umfasst, und wobei das Pneumatikmittel ein Gas wie Luft umfasst.

5. Interdentales Bürstsystem nach einem der vorhergehenden Ansprüche, bei dem die Fluidkammer abgedichtet ist.

6. Interdentales Bürstsystem nach einem der vorhergehenden Ansprüche, bei dem die Fluidkammer derart konfiguriert ist, dass sie über Stopfen (6) befüllt, entleert und wiederbefüllt werden kann.

7. Interdentales Bürstsystem nach einem der vorhergehenden Ansprüche, das ferner ein Mundspülungs-Teilsystem (7) umfasst, welches umfasst: Mundspülungskammer (7A), Mundspülungskolben (7B) und Mundspülungsabgabemittel, das Löcher oder permeable Membran (7C) umfassen kann.

8. Interdentales Bürstsystem nach einem der vorhergehenden Ansprüche, bei dem es auch Gelenk (3C) gibt, um Biegen um die Zähne zu erleichtern, und eine Variation im Material oder eine Variation in der Geometrie, wie etwa in einem Faltenbalg oder einem mechanischen Gelenk, umfasst.

9. Interdentales Bürstsystem nach einem der vorhergehenden Ansprüche, bei dem Bürstumfangsmittel (2) Oberflächenvorsprünge oder Borsten umfasst.

10. Interdentales System nach einem der vorhergehenden Ansprüche, bei dem der Bürstumfang (2) eine Bürsthülle umfasst.

## Revendications

1. Système de brossage interdentaire (1), comprenant :
un moyen de circonférence de brossage (2) ;
un moyen de redimensionnement de circonférence (3) ; et
un moyen de commande (4),
dans lequel le moyen de redimensionnement de circonférence (3) comprend un moyen hydraulique ou un moyen pneumatique comprenant une chambre à fluide qui est divisée en une région de réservoir (3A) et une région de circonférence (3B), qui sont collectivement agencées de telle sorte que le moyen de commande (4) est utilisé pour ajuster le moyen de redimensionnement de circonférence (3), qui est configuré pour élargir ou réduire la circonférence de brossage (2) pour s'adapter aux différentes tailles d'espaces entre les dents, et **caractérisé en ce que** ledit moyen de commande (4) comprend un matériau flexible qui est positionné dans, ou qui entoure, la région de réservoir (3A), de telle sorte qu'il peut être pressé à l'aide d'une pression de doigt pour déplacer une quantité suffisante de fluide depuis la région de réservoir (3A) jusque dans la région de circonférence (3B), élargissant ainsi la taille de la circonférence de brossage (2) tel que nécessaire, ou inverser le processus en relâchant la pression de doigt pour déplacer le fluide depuis la région de circonférence (3B) jusque dans la région de réservoir (3A), réduisant ainsi la taille de la circonférence de brossage (2) tel que nécessaire.

2. Système de brossage interdentaire selon la revendication 1, dans lequel le système comprend en outre une poignée (5) qui entoure sensiblement le moyen de commande (4).

3. Système de brossage interdentaire selon une quelconque revendication précédente dans lequel la chambre à fluide comprend un moyen hydraulique, et dans lequel le moyen hydraulique comprend un liquide tel que de l'eau.

4. Système de brossage interdentaire selon l'une quelconque des revendications 1 ou 2, dans lequel la chambre à fluide comprend un moyen pneumatique, et dans lequel le moyen pneumatique comprend un gaz tel que de l'air.

5. Système de brossage interdentaire selon une quelconque revendication précédente, dans lequel la chambre à fluide est scellée.

6. Système de brossage interdentaire selon une quelconque revendication précédente, dans lequel la chambre à fluide est configurée de telle sorte qu'elle peut être remplie, vidée et remplie à nouveau via un bouchon (6).

7. Système de brossage interdentaire selon une quelconque revendication précédente, qui comprend en outre un sous-système de bain de bouche (7), qui comprend : une chambre de bain de bouche (7A), un piston de bain de bouche (7B) et un moyen de distribution de bain de bouche, qui peut comprendre des trous ou une membrane perméable (7C).

8. Système de brossage interdentaire selon une quelconque revendication précédente, dans lequel il existe également une charnière (3C) pour faciliter la flexion autour des dents et comprend une variation de matériau ou une variation de géométrie telle qu'un soufflet ou une charnière mécanique.

9. Système de brossage interdentaire selon une quelconque revendication précédente, dans lequel le moyen de circonférence de brossage (2) comprend des saillies de surface ou des poils.

10. Système interdentaire selon une quelconque revendication précédente, dans lequel la circonférence de brossage (2) comprend une gaine de brossage.
